# EUROPEAN PATENT APPLICATION

(11) **EP 4 733 630 A1**
(43) Date of publication of application: **29.04.2026**
(21) Application number: 24824902.1
(22) Date of filing: 05.02.2024
(51) Int. Cl.: F16H 57/04, B60K 11/02

(54) **VEHICLE THERMAL MANAGEMENT SYSTEM, METHOD AND DEVICE, VEHICLE AND STORAGE MEDIUM**

(30) Priority: 20.06.2023 CN 202310737822
(71) Applicant: Chongqing Changan Automobile Co., Ltd., Chongqing 400023 (CN)
(72) Inventor: ZHOU, Wenwen, Chongqing 400023 (CN); TAN, Yun, Chongqing 400023 (CN); LI, Chunwu, Chongqing 400023 (CN); CAI, Chen, Chongqing 400023 (CN); LI, Chun, Chongqing 400023 (CN)
(74) Representative: Groth & Co. KB
(86) International application number: PCT/CN2024/075947
(87) International publication number: WO 2024/259999

(57) **Abstract**

A vehicle thermal management system, method and apparatus, a vehicle and a storage medium. The system comprises an electrically driven transmission assembly (12) and an external oil cooler (13). The electrically driven transmission assembly comprises a transmission oil cavity (10), an internal heat exchanger (5) and an electric motor oil cavity (11), wherein transmission components (4), a transmission oil temperature sensor (1) and a first control valve (21) are arranged in the transmission oil cavity; the internal heat exchanger is configured for realizing heat transfer of the transmission oil cavity and the electric motor oil cavity; and the first control valve is connected to the transmission components and the internal heat exchanger and is configured for connecting the transmission components to the internal heat exchanger according to the real-time oil temperature of the transmission oil cavity measured by the transmission oil temperature sensor. The external oil cooler is configured for transferring heat of the electric motor oil cavity to the outside of the electrically driven transmission assembly. Since a transmission and an electric motor do not need to share an oil cavity, when the oil temperature requirements of the transmission are met, the oil temperature in the electric motor oil cavity can be reduced by means of the external oil cooler, thereby improving the operating efficiency of the electrically driven transmission and thus improving the overall driving efficiency of a vehicle.

## Description

### TECHNICAL FIELD

The present application relates to the technical field of computers, in particular to a vehicle thermal management system, method and apparatus, a vehicle and a storage medium.

### BACKGROUND

A lubricating oil temperature has a great influence on a service life and service efficiency of a transmission mechanism of an automobile transmission. An excessively low oil temperature will lead to increase of lubricating oil viscosity and increase of a mechanical energy loss of the transmission. An excessively high oil temperature will lead to deformation of the transmission mechanism, acceleration of aging of sealing parts, and shortening of the service life of the transmission. Therefore, existing automobiles are equipped with thermal management apparatuses configured to heat lubricating oil at a low temperature and cool it at a high temperature, which ensures higher work efficiency of the transmission while the service life of the transmission is ensured.

However, in order to reduce a size of a system and improve a power density, an existing technology integrates a motor and the transmission to obtain an electrically driven transmission. In the electrically driven transmission, the motor and the transmission share an oil chamber and an oil circuit, and a management strategy of the thermal management apparatus is the same. When the optimal efficiency of the transmission is ensured, a temperature of the lubricating oil used by the motor rises, resulting in decrease of the work efficiency of the motor, which leads to reduction of the overall work efficiency of a vehicle.

### SUMMARY OF THE INVENTION

One of objectives of the present application is to provide a vehicle thermal management system to solve a problem that a transmission and a motor of a vehicle execute the same thermal management strategy, resulting in low work efficiency of the motor in the prior art; a second objective is to provide a vehicle thermal management method; a third objective is to provide a vehicle thermal management apparatus; a fourth objective is to provide a vehicle able to implement the vehicle thermal management method provided by the present application; and a fifth objective is to provide a storage medium able to implement the vehicle thermal management method provided by the present application.

In order to implement the above objectives, the present application adopts the following technical solution.

In a first aspect, the present application provides a vehicle thermal management system, including an electrically driven transmission assembly and an external oil cooler;
the electrically driven transmission assembly includes a transmission oil chamber, a built-in heat exchanger and a motor oil chamber, and the transmission oil chamber has a transmission component, a transmission oil temperature sensor and a first control valve provided therein;
the built-in heat exchanger is configured to realize heat transfer between the transmission oil chamber and the motor oil chamber;
the first control valve is connected to the transmission component and the built-in heat exchanger and is configured to selectively communicate the transmission component and the built-in heat exchanger with each other according to a real-time oil temperature of the transmission oil chamber measured by the transmission oil temperature sensor; and
the external oil cooler is configured to transfer heat of the motor oil chamber to the outside of the electrically driven transmission assembly.

According to the above technical means, the vehicle thermal management system provided by the present application may transfer heat in the transmission oil chamber to the motor oil chamber through the heat exchanger and transfers the heat to the outside of the electrically driven transmission through the external oil cooler. Since the transmission and the motor do not need to share an oil chamber in the technical solution provided by the present application, on the premise of meeting the requirement of the transmission oil temperature, the oil temperature in the motor oil chamber may be reduced through the external oil cooler to improve work efficiency of the electrically driven transmission, and then improve overall driving efficiency of the vehicle.

Optionally, in the vehicle thermal management system provided by the present application, the transmission oil chamber also has a first oil pump provided therein, the first control valve is a first three-way valve, and the first three-way valve is connected to the built-in heat exchanger through a first pipeline, is connected to the first oil pump through a second pipeline, and is connected to the transmission component through a third pipeline;
the first oil pump is configured to drive lubricating oil in the transmission oil chamber to flow; and the first three-way valve is configured to interconnect any two of the first pipeline, the second pipeline and the third pipeline.

According to the above technical means, since the first control valve of the present application is the three-way valve, it may interconnect any two of the three pipelines, which facilitates switching of the vehicle thermal management system according to a demand. When two pipelines are connected, the third pipeline is automatically cut off, so as to realize switching of heat circulation and stop of the transmission and the built-in heat exchanger. Only one pipeline is needed to realize the thermal management of the transmission in the vehicle, which reduces a pipeline demand, reduces the production cost and improves the thermal management efficiency.

Optionally, in the vehicle thermal management system provided by the present application, the first three-way valve is configured to perform a thermal management action on the transmission oil chamber according to the real-time oil temperature of the transmission oil chamber, a preset upper threshold of transmission oil temperature and a preset lower threshold of transmission oil temperature.

According to the above technical means, since the vehicle thermal management system provided by the present application may limit the transmission oil temperature through the first three-way valve, it is ensured that the transmission keeps higher work efficiency while the service life of the transmission is ensured.

Optionally, in the vehicle thermal management system provided by the present application, the motor oil chamber has a motor component, a motor oil temperature sensor and a second control valve provided therein; and
the second control valve is connected to the motor component, the external oil cooler and the built-in heat exchanger, and is configured to selectively communicate the motor component, the built-in heat exchanger and
the external oil cooler with each other according to a real-time oil temperature of the motor oil chamber measured by the motor oil temperature sensor.

According to the above technical means, since the thermal management system provided by the present application may further realize the thermal management of the motor through the second control valve, it may control a lubricating oil temperature in the oil chamber where the motor is located, so it is ensured that a work temperature of the motor is as low as possible, and the work efficiency of the motor is improved.

Optionally, in the vehicle thermal management system provided by the present application, the motor oil chamber also has a second oil pump provided therein, the second control valve is a second three-way valve, and the second three-way valve is connected to the built-in heat exchanger through a fourth pipeline, is connected to the second oil pump through a fifth pipeline and is connected to the motor component through a sixth pipeline;
the second oil pump is configured to drive lubricating oil in connection pipelines in the motor oil chamber to flow; and
the second three-way valve is configured to interconnect any two of the fourth pipeline, the fifth pipeline and the sixth pipeline.

According to the above technical means, since the second control valve of the present application is the three-way valve, it may interconnect any two of the three pipelines, which facilitates switching of the vehicle thermal management system according to the demand. When two pipelines are connected, the third pipeline is automatically cut off, so as to realize switching of heat circulation and stop of the motor and the built-in heat exchanger. Only one pipeline is needed to realize the thermal management of the motor in the vehicle, which reduces the pipeline demand, reduces the production cost and improves the thermal management efficiency.

Optionally, the vehicle thermal management system provided by the present application further includes a battery pack, a third control valve and a battery temperature sensor; and the third control valve is connected to the battery pack and the external oil cooler and is configured to selectively communicate the battery pack and the external oil cooler with each other according to a real-time temperature of the battery pack measured by the battery temperature sensor.

According to the above technical means, since the vehicle thermal management system provided by the present application may heat a battery through the third control valve, the heat of the motor of the vehicle is saved for heating the battery, which avoids the waste of resources of the vehicle itself caused by heating the battery in order to ensure the normal use of the battery, and reduces the power demand of a vehicle heater.

Optionally, the vehicle thermal management system provided by the present application further includes a low-temperature radiator;
the third control valve further is connected to the low-temperature radiator and is configured to selectively communicate the low-temperature radiator and the external oil cooler with each other according to the real-time temperature of the battery pack measured by the battery temperature sensor; and the low-temperature radiator is configured to transfer heat acquired by the external oil cooler from the electrically driven transmission assembly to the outside of the system.

According to the above technical means, since the vehicle thermal management system provided by the present application is connected to the low-temperature radiator, it may transfer unnecessary heat of the transmission and the battery pack to the outside of the vehicle, so it is ensured that a work temperature of the motor of the vehicle is as low as possible, and the work efficiency of the motor is improved.

Optionally, in the vehicle thermal management system provided by the present application, the external oil cooler is connected to a water pump, the third control valve is a third three-way valve, and the third three-way valve is connected to the external oil cooler through a seventh pipeline, is connected to the battery pack through an eighth pipeline, and is connected to the low-temperature radiator through a ninth pipeline;
the water pump is configured to drive water in a connection pipeline of the external oil cooler to flow; and the third three-way valve is configured to interconnect any two of the seventh pipeline, the eighth pipeline and the ninth pipeline.

According to the above technical means, since the third control valve of the present application is the three-way valve, it may interconnect any two of the three pipelines, which facilitates switching of the vehicle thermal management system according to the demand. When two pipelines are connected, the third pipeline is automatically cut off, so as to realize switching of heat circulation and stop of the electrically driven transmission assembly and the battery pack. Only one pipeline is needed to realize the thermal management of the electrically driven transmission assembly and the battery pack in the vehicle, which reduces the pipeline demand, lowers the production cost and improves the thermal management efficiency.

In a second aspect, the present application further provides a vehicle thermal management method, used for controlling the transmission thermal management system of any one of the first aspect, and including:
acquiring a real-time oil temperature of a transmission oil chamber and a real-time temperature of a battery pack;
performing a judgement of transmission oil temperature according to the real-time oil temperature of the transmission oil chamber, a preset upper threshold of transmission oil temperature and a preset lower threshold of transmission oil temperature to acquire a judgement result of transmission oil temperature;
executing a thermal management action of an electrically driven transmission assembly according to the judgement result of transmission oil temperature;
performing a judgement of battery temperature according to the real-time oil temperature of the battery pack and a preset battery temperature threshold to acquire a judgement result of battery temperature; and
executing a thermal management action of the battery pack according to the judgement result of battery temperature.

In a third aspect, the present application further provides a vehicle thermal management apparatus, including:
a temperature measurement module, configured to acquire a real-time oil temperature of a transmission oil chamber and a real-time temperature of a battery pack;
a transmission oil temperature judgement module, configured to perform a judgement of transmission oil temperature according to the real-time oil temperature of the transmission oil chamber, a preset upper threshold of transmission oil temperature and a preset lower threshold of transmission oil temperature to acquire a judgement result of transmission oil temperature;
a transmission thermal management module, configured to execute a thermal management action of an electrically driven transmission assembly according to the judgement result of transmission oil temperature;
a battery temperature judgement module, configured to perform a judgement of battery temperature according to the real-time oil temperature of the battery pack and a preset battery temperature threshold to acquire a judgement result of battery temperature; and
a battery thermal management module, configured to execute a thermal management action of the battery pack according to the judgement result of battery temperature.

In a fourth aspect, the present application further provides a vehicle, including:
at least one processor; and
a memory in communication connection with the at least one processor, wherein,
the memory has instructions stored therein, the instructions are executable by the at least one processor, and the instructions, when being executed by the at least one processor, enable the at least one processor to perform the above vehicle thermal management method.

In a fifth aspect, the present application further provides a computer readable storage medium, having a computer program stored therein, wherein the computer program, when being executed by a processor, enables the processor to perform the above vehicle thermal management method.

The present application has the beneficial effects that:
the vehicle thermal management system provided by the present application may transfer heat from the transmission oil chamber to the motor oil chamber through the built-in heat exchanger and transfer the heat to the outside of the electrically driven transmission assembly through the external oil cooler. Since the transmission and the motor do not need to share an oil chamber in the technical solution provided by the present application, on the premise of meeting the requirement of the transmission oil temperature, the oil temperature in the motor oil chamber may be reduced through the external oil cooler, which improves the work efficiency of the electrically driven transmission assembly, and then improves the overall drive efficiency of the vehicle.

### BRIEF DESCRIPTION OF THE DRAWINGS

One or more embodiments are exemplarily illustrated through pictures in the corresponding accompanying drawings, these exemplary illustrations do not constitute the limitation on the embodiments, elements with the same reference numbers in the accompanying drawings are represented as the similar elements, and unless otherwise specifically stated, the pictures in the accompanying drawings do not constitute the proportional limitation.
Fig. 1 is a first schematic diagram of a vehicle thermal management system provided by the present application;
Fig. 2 is a second schematic diagram of a vehicle thermal management system provided by the present application;
Fig. 3 is a flow diagram of a logic judgement of vehicle thermal management provided by the present application;
Fig. 4 is a schematic diagram of pipeline communication of a vehicle thermal management system under an internal circulation low-temperature heating mode provided by the present application;
Fig. 5 is a schematic diagram of pipeline communication of a vehicle thermal management system under an external circulation high-temperature heating mode provided by the present application;
Fig. 6 is a schematic diagram of pipeline communication of a vehicle thermal management system under an external circulation low-temperature heating mode provided by the present application;
Fig. 7 is a schematic diagram of pipeline communication of a vehicle thermal management system under a complete-circulation low-temperature heating mode provided by the present application;
Fig. 8 is a schematic diagram of pipeline communication of a vehicle thermal management system under a complete-circulation high-temperature heating mode provided by the present application;
Fig. 9 is a schematic diagram of a vehicle thermal management method provided by an embodiment of the present application;
Fig. 10 is a schematic diagram of a vehicle thermal management apparatus provided by an embodiment of the present application; and
Fig. 11 is a schematic structural diagram of an electronic device provided by an embodiment of the present application.

### DETAILED DESCRIPTION

Implementations of the present application are described below with reference to the accompanying drawings and preferred embodiments, and other advantages and functions of the present application can be easily understood by those skilled in the art from the contents disclosed in this specification. The present application may also be implemented or applied in other different specific implementations, and various details in the present specification may also be modified or changed based on different points of view and applications without departing from the spirit of the present application. It should be understood that the preferred embodiments are intended only to illustrate the present application and not to limit the scope of protection of the present application.

It needs to be noted that the diagrams provided in the following embodiments only illustrate the basic construction of the present application schematically, so that only components related to the present application are displayed in the diagrams rather than drawing according to the quantity, shape and size of the components in the actual implementation, the type, quantity and proportion of the components in the actual implementation may be arbitrarily changed and the layout pattern of the components may also be more complex.

For an electrically driven transmission integrated with a drive motor, in existing technologies, the transmission and the motor often use the same type of oil, share the same oil chamber, and share the same oil circuit, and adopt the same thermal management method. However, work efficiency of the transmission and the motor of a vehicle has different requirements for a lubricating oil temperature. The work efficiency of the transmission requires the lubricating oil temperature to be within a range, while the work efficiency of the motor requires the lubricating oil temperature to be as low as possible, and the same thermal management method is adopted for the transmission and the motor, resulting in low work efficiency of the motor. In addition, a battery on the vehicle, especially the battery of the electric vehicle often has a certain requirement for temperatures, and the existing technology often uses a heater to heat the battery to ensure that the battery works, but this battery has a certain requirement for the power of the heater, wasting the energy of the vehicle itself.

A vehicle thermal management system and method provided by the present application may transfer heat from a transmission oil chamber to a motor oil chamber through a built-in heat exchanger and transfer the heat to the outside of the electrically driven transmission assembly through an external oil cooler aimed at the existing technical problem. Since the transmission and the motor provided by the present application do not need to share an oil chamber, on the premise of meeting the requirement of the transmission oil temperature, an oil temperature in the motor oil chamber may be reduced through the external oil cooler, which improves work efficiency of the electrically driven transmission and then improves overall drive efficiency of the vehicle.

In addition, the heat generated by the normal work of the motor and the characteristics that the motor may generate heat are effectively used in increase of a transmission oil temperature and a battery pack oil temperature, which may lower the power demand of the vehicle heater and save the energy of the vehicle itself.

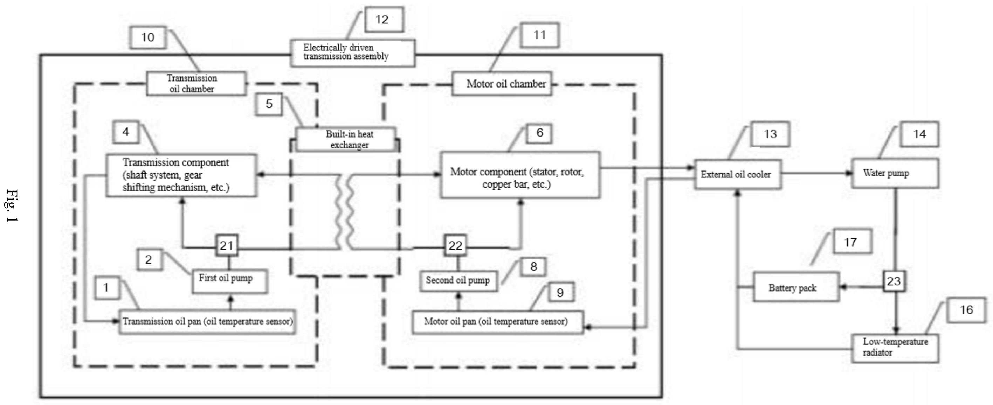

A first implementation of the present application relates to a vehicle thermal management system, as shown in Fig. 1, including an electrically driven transmission assembly and an external oil cooler;
the electrically driven transmission assembly includes a transmission oil chamber, a built-in heat exchanger and a motor oil chamber, and the transmission oil chamber has a transmission component, a transmission oil temperature sensor and a first control valve provided therein;
the built-in heat exchanger is configured to realize heat transfer between the transmission oil chamber and the motor oil chamber;
the first control valve is connected to the transmission component and the built-in heat exchanger and is configured to selectively communicate the transmission component and the built-in heat exchanger with each other according to a real-time oil temperature of the transmission oil chamber measured by the transmission oil temperature sensor; and
the external oil cooler is configured to transfer heat of the motor oil chamber to the outside of the electrically driven transmission assembly.

Specifically, the vehicle thermal management system provided by the present application is mainly used for performing thermal management on the electrically driven transmission assembly 12, and the electrically driven transmission assembly 12 internally includes a transmission and a motor which are assembled. In the vehicle thermal management system provided by the present application, the electrically driven transmission assembly 12 has the transmission oil chamber 10, the motor oil chamber 11 and the built-in heat exchanger 5 connected with the transmission oil chamber 10 and the motor oil chamber 11 provided therein. The transmission oil chamber 10 internally includes the transmission component 4, such as a transmission shaft system mechanism and a transmission gear shifting mechanism, a transmission oil pan 1 provided with an oil temperature sensor, and a first control valve 21. One side of the transmission component 4 is connected to one side of the transmission oil pan 1 through a pipeline, the other side of the transmission oil pan is connected to one end of the first control valve 21 through a pipeline, the other two ends of the first control valve 21 are connected to the other side of the transmission component 4 and the built-in heat exchanger 5 through pipelines respectively, and the transmission component 4 is also connected to the built-in heat exchanger 5 through a pipeline and is configured to form a loop with the pipeline connecting the first control valve 21 with the transmission component 4 and the pipeline connecting the first control valve 21 with the built-in heat exchanger 5. The built-in heat exchanger 5 is configured to realize heat exchange between the transmission oil chamber 10 and the motor oil chamber 11. The motor oil chamber 11 is connected to the external oil cooler 13 outside the electrically driven transmission assembly 12 through a pipeline, and the external oil cooler 13 is configured to dissipate the heat in the motor oil chamber 11, thereby realizing the thermal management of the transmission oil chamber 10 and the motor oil chamber 11 in the electrically driven transmission assembly 12.

A thermal management method for the transmission oil chamber 10 and the motor oil chamber 11 is implemented by adopting, but not limited to, the following way:
the oil temperature sensor located in the transmission oil pan 1 detects a lubricating oil temperature in the transmission oil chamber 10 in real time, when the oil temperature sensor detects that the lubricating oil temperature in the transmission oil chamber 10 does not meet a lubricating oil temperature range during operation of the transmission, the vehicle thermal management system controls the pipeline connected to the transmission oil pan 1 and the pipeline connected to the built-in heat exchanger 5 in the first control valve 21 to communicate, and at the moment, a lubricating oil pipeline loop from the transmission component 4 to the transmission oil pan 1 to the first control valve 21 to the built-in heat exchanger 5 and finally returning to the transmission component is formed, which achieves heat exchange of the transmission oil chamber 10 and the motor oil chamber 11. For example, when the lubricating oil temperature in the transmission oil chamber is higher than the lubricating oil temperature range during operation of the transmission, the heat is transferred from the transmission oil chamber 10 to the motor oil chamber 11 through the lubricating oil continuously passing through the built-in heat exchanger 5, and the heat is transferred from the motor oil chamber 11 to the external oil cooler 13, which achieves the cooling of the transmission oil chamber 10 at a high temperature; and when the lubricating oil temperature in the transmission oil chamber is lower than the lubricating oil temperature range during operation of the transmission, the heat is transferred from the motor oil chamber 11 to the transmission oil chamber 10 through the lubricating oil continuously passing through the built-in heat exchanger 5, which achieves the temperature rise of the transmission oil chamber 10 at a low temperature. When the lubricating oil temperature in the transmission oil chamber 10 is within the lubricating oil temperature range during operation of the transmission, the thermal management system controls the first control valve 21 to cut off the pipeline communication between the first control valve 21 and the built-in heat exchanger 5 to avoid the heat loss in the transmission oil chamber.

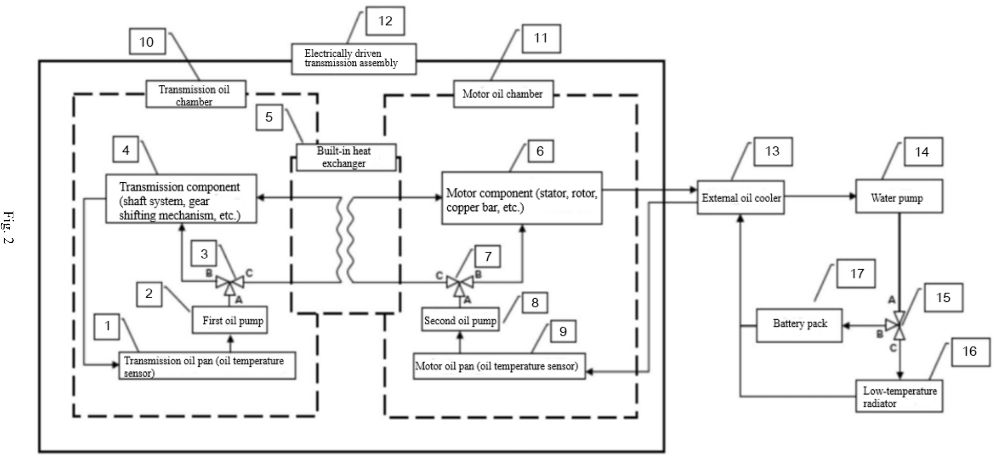

On the basis of the above implementation, as shown in Fig. 2, in the vehicle thermal management system provided by the present application, the transmission oil chamber also has a first oil pump provided therein, the first control valve is a first three-way valve, and the first three-way valve is connected to the built-in heat exchanger through a first pipeline, is connected to the first oil pump through a second pipeline, and is connected to the transmission component through a third pipeline;
the first oil pump is configured to drive lubricating oil in the transmission oil chamber to flow; and
the first three-way valve is configured to interconnect any two of the first pipeline, the second pipeline and the third pipeline.

Specifically, the first control valve 21 is the first three-way valve 3, and in order to drive the lubricating oil to flow in the pipeline, the first oil pump 2 is arranged on the pipeline between the transmission oil pan 1 and the first three-way valve 3. A port C of the first three-way valve 3 is connected to the built-in heat exchanger 5 through the first pipeline, a port A of the first three-way valve 3 is connected to the first oil pump 2 through the second pipeline, and a port B of the first three-way valve 3 is connected to the transmission component 4 through the third pipeline.

On the basis of the above implementation, since the first control valve 21 of the present application is the three-way valve, it may interconnect any two of the three pipelines, which facilitates switching of the vehicle thermal management system according to the demand. When two pipelines are connected, the third pipeline is automatically cut off, so as to realize switching of heat circulation and stop of the transmission and the built-in heat exchanger. Only one pipeline is needed to realize the thermal management of the transmission in the vehicle, which lowers the pipeline demand, reduces the production cost and improves the thermal management efficiency.

On the basis of the above implementation, in the vehicle thermal management system provided by the present application, the first three-way valve is configured to perform a thermal management action on the transmission oil chamber according to the real-time oil temperature of the transmission oil chamber, a preset upper threshold of transmission oil temperature and a preset lower threshold of transmission oil temperature.

Specifically, the thermal management system controls the communication state of the pipelines corresponding to any two of the port A, the port B and the port C in the first three-way valve 3 to realize the thermal management action of the transmission oil chamber 10 and the motor oil chamber 11.

The thermal management method for the transmission oil chamber 10 and the motor oil chamber 11 may be implemented by adopting, but not limited to, the following way:
the oil temperature sensor located in the transmission oil pan 1 detects the lubricating oil temperature in the transmission oil chamber 10 in real time, when the oil temperature sensor detects that the lubricating oil temperature in the transmission oil chamber 10 does not meet the lubricating oil temperature range during operation of the transmission, the vehicle thermal management system controls the port A and the port C in the first three-way valve to be in pipeline communication, at the moment, a lubricating oil pipeline loop from the transmission component 4 to the transmission oil pan 1 to the first oil pump 2 to the first three-way valve 3 to the built-in heat exchanger 5 and finally returning to the transmission component 4 is formed, and the first oil pump 2 drives the lubricating oil in the loop to circularly flow to achieve heat exchange with the motor oil chamber 11. For example, when the lubricating oil temperature in the transmission oil chamber is higher than the lubricating oil temperature range during operation of the transmission, the heat is transferred from the transmission oil chamber 10 to the motor oil chamber 11 through the lubricating oil continuously passing through the built-in heat exchanger 5, and the heat is transferred from the motor oil chamber 11 to the external oil cooler 13, which achieves the cooling of the transmission oil chamber 10 at a high temperature; and when the lubricating oil temperature in the transmission oil chamber is lower than the lubricating oil temperature range during operation of the transmission, the heat is transferred from the motor oil chamber 11 to the transmission oil chamber 10 through the lubricating oil continuously passing through the built-in heat exchanger 5, which achieves the temperature rise of the transmission oil chamber 10 at a low temperature. When the lubricating oil temperature in the transmission oil chamber 10 is within the lubricating oil temperature range during operation of the transmission, connection with the built-in heat exchanger 5 is cut off, to avoid the heat loss in the transmission oil chamber.

On the basis of the above implementation, the transmission oil temperature may be limited through the first three-way valve in the vehicle thermal management system provided by the present application to ensure that the transmission keeps higher work efficiency while the service life of the transmission life is ensured.

On the basis of the above implementation, in the vehicle thermal management system provided by the present application, the motor oil chamber has a motor component, a motor oil temperature sensor and a second control valve provided therein; and
the second control valve is connected to the motor component, the external oil cooler and the built-in heat exchanger, and is configured to selectively communicate the motor component, the built-in heat exchanger and the external oil cooler with each other according to a real-time oil temperature of the motor oil chamber measured by the motor oil temperature sensor.

Specifically, the motor oil chamber 11 includes the motor component 6, such as a stator, a rotor, a copper bar and other mechanisms in the motor, a motor oil pan 9 provided with the oil temperature sensor, and the second control valve 22. One side of the motor component 6 is connected to the external oil cooler 13 outside the electrically driven transmission assembly 12 through a pipeline, the other side of the external oil cooler 13 is connected to a side of the motor oil pan 9 through a pipeline, and the other side of the motor oil pan 9 is connected to one end of the second control valve 22 through a pipeline. The other two ends of the second control valve 22 are connected to the other side of the motor component 6 and the built-in heat exchanger 5 respectively through pipelines, and the motor component 6 is also connected to the built-in heat exchanger 5 through a pipeline and is configured to form a loop with the pipeline connecting the second control valve 22 with the motor component 6 and the pipeline connecting the second control valve 22 with the built-in heat exchanger 5.

On the basis of the above implementation, since the thermal management system provided by the present application may also realize the thermal management of the motor through the second control valve 22, it may control the lubricating oil temperature in the oil chamber where the motor is located, so it is ensured that the work temperature of the motor is as low as possible, and the work efficiency of the motor is improved.

On the basis of the above implementation, in the vehicle thermal management system provided by the present application, the motor oil chamber also has a second oil pump provided therein, the second control valve is a second three-way valve, and the second three-way valve is connected to the built-in heat exchanger through a fourth pipeline, is connected to the second oil pump through a fifth pipeline and is connected to the motor component through a sixth pipeline;
the second oil pump is configured to drive lubricating oil in connection pipelines in the motor oil chamber to flow; and
the second three-way valve is configured to interconnect any two of the fourth pipeline, the fifth pipeline and the sixth pipeline.

Specifically, the second control valve 22 is the second three-way valve 7, and in order to drive the lubricating oil to flow in the pipeline, the second oil pump 8 is arranged on the pipeline between the motor oil pan 9 and the second three-way valve 7. A port C of the second three-way valve 7 is connected to the built-in heat exchanger 5 through the fourth pipeline, a port A of the second three-way valve 7 is connected to the second oil pump 8 through the fifth pipeline, and a port B of the second three-way valve 7 is connected to the motor component 6 through the sixth pipeline.

The thermal management method for the transmission oil chamber 10 and the motor oil chamber 11 may be implemented by adopting, but not limited to, the following way:
when the lubricating oil temperature in the transmission oil chamber 10 is lower than the lubricating oil temperature range during operation of the transmission, the vehicle thermal management system controls the pipeline where the port A and port C of the second three-way valve 7 is located to communicate to form a loop after the pipeline where the port A of the first three-way valve 3 is located and the pipeline where the port C of the first three-way valve 3 is located communicate to form the loop, and at the moment, the lubricating oil in the motor oil chamber 11 circularly passes through the built-in heat exchanger 5 and transfers the heat to the lubricating oil circularly passing through the built-in heat exchanger 5 in the transmission oil chamber 10, so as to achieve the temperature rise of the lubricating oil in the transmission oil chamber.

When the lubricating oil temperature in the transmission oil chamber 10 is higher than the lubricating oil temperature range during operation of the transmission, the vehicle thermal management system controls the port A and the port C of the second three-way valve 7 to communicate to form a loop, and at the moment, the lubricating oil in the transmission oil chamber 10 circularly passes through the built-in heat exchanger 5 and transfers heat to the lubricating oil circularly passing through the built-in heat exchanger 5 in the motor oil chamber 11, so as to achieve cooling of the lubricating oil in the transmission oil chamber.

When the lubricating oil temperature in the transmission oil chamber 10 is within the lubricating oil temperature range during operation of the transmission, and the pipeline where the port B of the first three-way valve 3 is located communicates with the pipeline where the port A is located, the thermal management system may control the pipelines where the port A and the port B of the second three-way valve 7 are located to communicate to form a lubricating oil loop from the motor component 6 to the external oil cooler 13 to the motor oil pan 9 to the second oil pump 8 to the second three-way valve 7, and finally returning to the motor component 6, and the heat of the lubricating oil in the motor oil chamber 11 is discharged from the external oil cooler 13.

On the basis of the above implementation, since the second control valve 22 of the present application is the three-way valve, it may interconnect any two of the three pipelines, which facilitates switching of the vehicle thermal management system according to the demand. When two pipelines are connected, the third pipeline is automatically cut off, so as to realize switching of heat circulation and stop of the motor and the built-in heat exchanger. Only one pipeline is needed to realize the thermal management of the motor in the vehicle, which reduces the pipeline demand, lowers the production cost and improves the thermal management efficiency.

On the basis of the above implementation, the vehicle thermal management system provided by the present application further includes a battery pack, a third control valve and a battery temperature sensor; and the third control valve is connected to the battery pack and the external oil cooler and is configured to selectively communicate the battery pack and the external oil cooler with each other according to a real-time temperature of the battery pack measured by the battery temperature sensor.

Specifically, the vehicle management system further includes the battery pack 17 and the third control valve 23, and in the vehicle thermal management system provided by the present application, the external oil cooler 13 has a pipeline loop for heating a battery. One end of the external oil cooler 13 is connected to the third control valve 23 through a pipeline, the other end of the third control valve 23 is connected to the battery pack 17 through a pipeline, and the battery pack 17 is connected to the external oil cooler through a pipeline to form the loop. The battery pack 17 is provided with the battery temperature sensor, when it is detected that a battery temperature is lower than a work temperature of the battery, the vehicle thermal management system enables a loop between the battery pack 17 and the external oil cooler 13 to be in a communication state through the third control valve 23, and the heat transferred from the electrically driven transmission assembly 12 is transferred along the loop from the external oil cooler 13 to the battery pack 17, so as to achieve thermal management of the battery pack 17.

On the basis of the above implementation, since the vehicle thermal management system provided by the present application may heat the battery through the third control valve 23, the heat of the motor of the vehicle is saved for heating the battery, which avoids the waste of resources of the vehicle itself caused by heating the battery in order to ensure the normal use of the battery, and reduces the power demand of a vehicle heater.

On the basis of the above implementation, the vehicle thermal management system provided by the present application further includes a low-temperature radiator;
the third control valve is further connected to the low-temperature radiator and is configured to selectively communicate the low-temperature radiator and the external oil cooler with each other according to the real-time temperature of the battery pack measured by the battery temperature sensor; and the low-temperature radiator is configured to transfer heat acquired by the external oil cooler from the electrically driven transmission assembly to the outside of the system.

Specifically, the vehicle management system further includes the low-temperature radiator 16, a third end of a third control valve 23 is connected to one end of the low-temperature radiator 16 through a pipeline, and the other end of the low-temperature radiator 16 is connected to the external oil cooler 13 through a pipeline. When the battery temperature sensor detects that the temperature of the battery pack 17 reaches the work temperature of the battery, the vehicle thermal management system controls the third control valve 23 to be disconnected from the pipeline where the battery pack 17 is located and to be connected to the pipeline where the low-temperature radiator 16 is located to dissipate heat from the external oil cooler.

On the basis of the above implementation, since the vehicle thermal management system provided by the present application is connected to the low-temperature radiator, it may transfer unnecessary heat of the transmission and the battery pack to the outside of the vehicle, so it is ensured that the work temperature of the motor of the vehicle is as low as possible and the work efficiency of the motor is improved.

On the basis of the above implementation, in the vehicle thermal management system provided by the present application, the external oil cooler is connected to a water pump, the third control valve is a third three-way valve, and the third three-way valve is connected to the external oil cooler through a seventh pipeline, is connected to the battery pack through an eighth pipeline, and is connected to the low-temperature radiator through a ninth pipeline;
the water pump is configured to drive water in a connection pipeline of the external oil cooler to flow; and the third three-way valve is configured to interconnect any two of the seventh pipeline, the eighth pipeline and the ninth pipeline.

Specifically, in order to drive the water to flow in the pipeline, the water pump 14 is arranged on the pipeline between the external oil cooler 13 and the third three-way valve 15. A port A of the third three-way valve 15 is connected to the external oil cooler 13 through the seventh pipeline, a port B of the third three-way valve 15 is connected to the battery pack 17 through the eighth pipeline, and a port C of the third three-way valve 15 is connected to the low-temperature radiator 16 through the ninth pipeline.

The thermal management method for the external oil cooler 13 and the battery pack 17 may be implemented by adopting, but not limited to, the following way:
when the battery temperature sensor detects that the temperature of the battery pack 17 is lower than the work temperature of the battery, the vehicle thermal management system controls the pipeline where the port A of the third three-way valve is located and the pipeline where the port B is located to communicate to form a loop, and the water pump 14 drives the water to circularly flow between the external oil cooler 13 and the battery pack 17, so as to realize temperature rise of the battery pack 17. When the battery temperature sensor detects that the temperature of the battery pack 17 is higher than the work temperature of the battery, the vehicle thermal management system controls the pipeline where the port A of the third three-way valve is located and the pipeline where the port C is located to communicate to form a loop, and the water pump 14 drives the water to circularly flow between the external oil cooler 13 and the low-temperature radiator 16, so as to realize dissipation of the heat in the external oil cooler 13.

On the basis of the above implementation, since the third control valve 23 of the present application is the three-way valve, it may interconnect any two of the three pipelines, which facilitates switching of the vehicle thermal management system according to the demand. When two pipelines communicate with each other, the third pipeline is automatically cut off, so as to realize switching of heat circulation and stop of the transmission and the built-in heat exchanger. Only one pipeline is needed to realize the thermal management of the transmission in the vehicle, which reduces the pipeline demand, lowers the production cost and improves the thermal management efficiency.

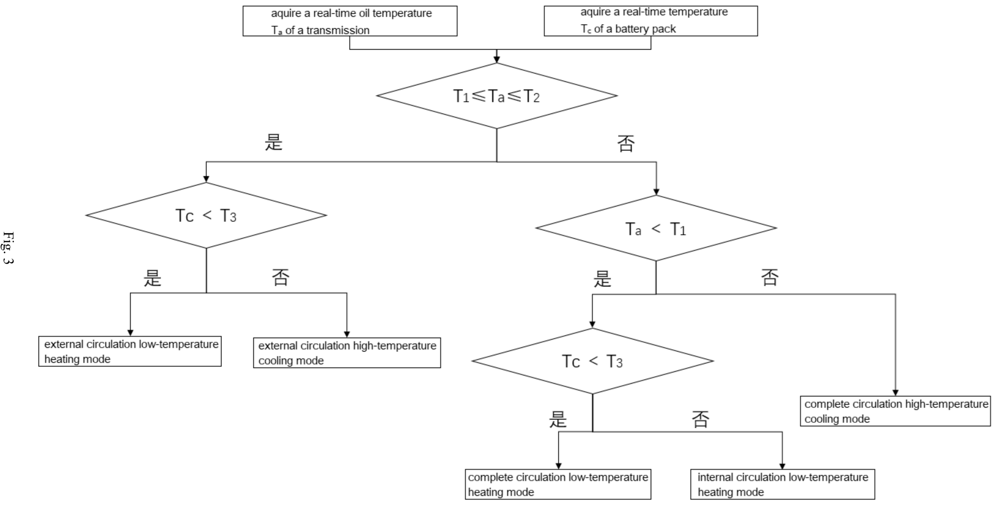

On the basis of the above implementation, as shown in Fig. 3, the present application further provides a vehicle thermal management flow:
a real-time oil temperature Tₐ of the transmission oil chamber 10 in the electrically driven transmission assembly is acquired through the oil temperature sensor located on the transmission oil pan, and a real-time temperature T_{c} of the battery pack 17 is acquired through the battery temperature sensor. First, the real-time oil temperature Tₐ of the transmission oil chamber 10 is judged, when it is judged that the Tₐ is between the lower threshold T₁ of the transmission oil temperature and the upper threshold T₂ of the transmission oil temperature, a judgement of temperature is performed on the real-time temperature T_{c} of the battery pack; and when the real-time temperature T_{c} of the battery pack is lower than a battery work temperature T₃, the vehicle thermal management system starts an external circulation low-temperature heating mode, and when the battery pack real-time temperature T_{c} is higher than the battery work temperature T₃, the vehicle thermal management system starts an external circulation high-temperature cooling mode. When it is judged that Tₐ is lower than the lower threshold T₁ of the transmission oil temperature, a judgement of temperature is performed on the real-time temperature T_{c} of the battery pack, when the real-time temperature T_{c} of the battery pack is lower than the battery work temperature T₃, the vehicle thermal management system starts a complete circulation low-temperature heating mode, and when the real-time temperature T_{c} of the battery pack is higher than the battery work temperature T₃, the vehicle thermal management system starts an internal circulation low-temperature heating mode. When it is judged that Tₐ is higher than the upper threshold T₂ of the transmission oil temperature, the vehicle thermal management system starts a complete circulation high-temperature cooling mode. T₁, T₂, and T₃ are set according to actual work demands of the vehicle, for example, T₁ is set as 60 °C, T₂ is set as 90 °C, and T₃ is set as 10 °C. In order to improve the work efficiency of the electrically driven transmission, the built-in heat exchanger 5 continuously exchanges the heat of the transmission oil chamber 10 and the motor oil chamber 11, and the heat is discharged outside the electrically driven transmission through the external oil cooler 13, for example, when the oil temperature of the transmission oil chamber 10 and the oil temperature of the oil chamber 11 are consistent and close to the lower limit of work of the lubricating oil of the transmission oil chamber 10, the temperature of the oil chamber where the motor is located may be lowered as much as possible while normal work of the transmission is ensured, so as to improve the work efficiency of the motor. In addition, in order to ensure the work efficiency of the battery, the heat discharged from the external oil cooler 13 is used to heat up the battery pack 17, so as to save the energy of the vehicle itself.

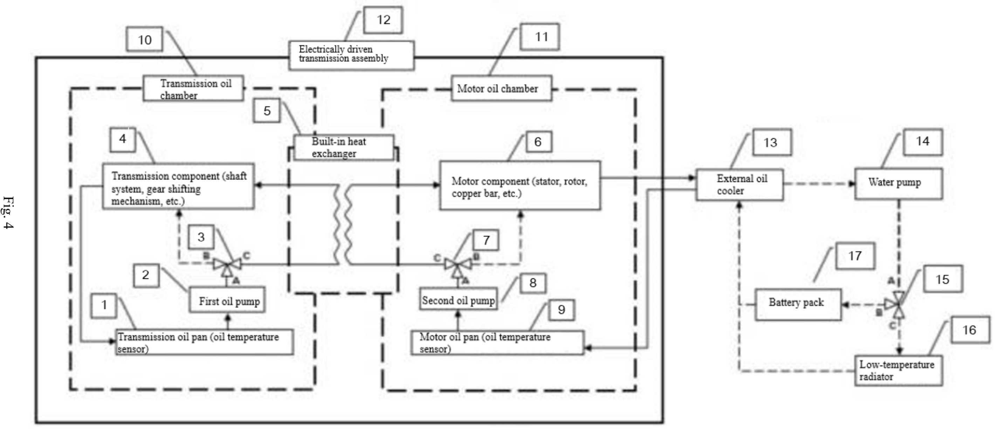

The internal circulation low-temperature heating mode is shown in Fig. 4. At the moment, the real-time oil temperature Tₐ of the transmission oil chamber 10 is lower than or equal to the lower threshold T₁ of the transmission oil temperature, the real-time temperature T_{c} of the battery pack is higher than the battery work temperature T₃, and the vehicle thermal management system adjusts a communication situation of the first three-way valve 3, the second three-way valve 7 and the third three-way valve 15. Specifically, the pipelines where the port A and the port C of the first three-way valve 3 are located communicate with each other, and the pipeline where the port B is located is disconnected; the pipelines where the port A and the port C of the second three-way valve 7 are located communicate with each other, and the pipeline where the port B is located is disconnected; and an externally-circulating liquid path, namely a circulating pipeline of the external oil cooler 13 connected with the water pump 14, the battery pack 17 and the low-temperature radiator 16, is in a non-working state. At the moment, the built-in heat exchanger 5 transfers the heat generated during work of the motor from the motor oil chamber 11 to the transmission oil chamber 10, so as to achieve the heat internal circulation process in the electrically driven transmission assembly 12 and achieve the heating effect of the transmission.

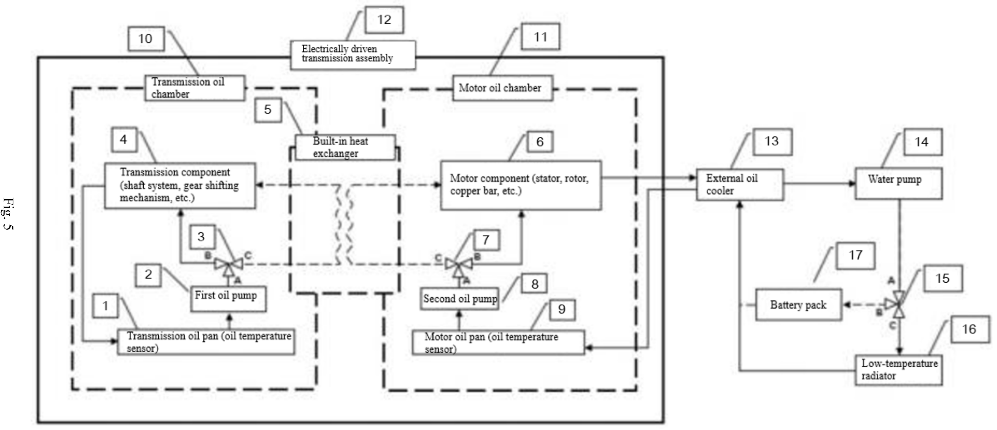

The external circulation high-temperature cooling mode is shown in Fig. 5. At the moment, the real-time oil temperature Tₐ of the transmission oil chamber 10 is lower than or equal to the upper threshold T₂ of the transmission oil temperature, and higher than or equal to the lower threshold T₁ of the transmission oil temperature, the real-time temperature T_{c} of the battery pack is higher than the battery work temperature T₃, and the vehicle thermal management system adjusts the communication situation of the first three-way valve 3, the second three-way valve 7 and the third three-way valve 15. Specifically, the pipelines where the port A and the port B of the first three-way valve 3 are located communicate with each other, and the pipeline where the port C is located is disconnected; the pipelines where the port A and the port B of the second three-way valve 7 are located communicate with each other, and the pipeline where the port C is located is disconnected; and the pipelines where the port A and the port C of the third three-way valve 15 are located communicate with each other, and the pipeline where the port B is located is disconnected. At the moment, there is no heat exchange between the transmission oil chamber 10 and the motor oil chamber 11, the heat generated during work of the motor is transferred to an external circulation loop of the vehicle thermal management system through the external oil cooler 13, the water carrying the heat generated during work of the motor passes through the water pump 14 to reach the low-temperature radiator 16 to discharge the heat and returns to the external oil cooler 13, and the circular cooling effect of the motor may be achieved while the work environment temperature of the motor is lowered.

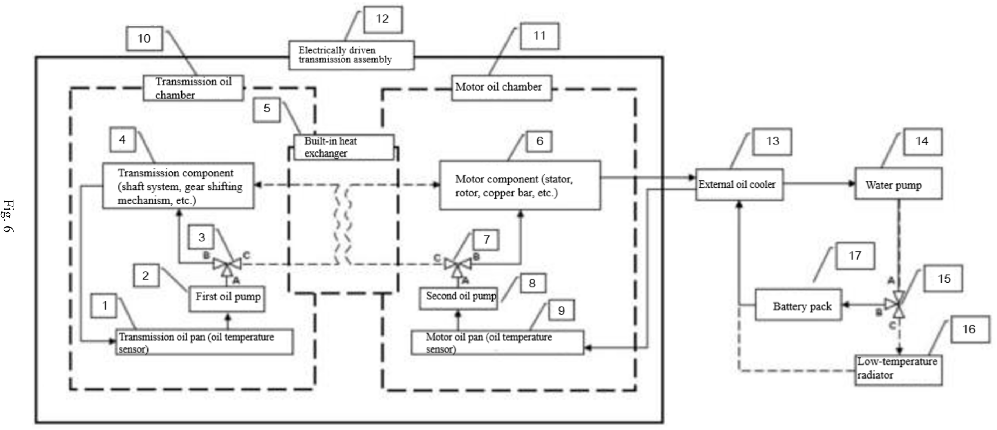

The external circulation low-temperature heating mode is shown in Fig. 6. At the moment, the real-time oil temperature Tₐ of the transmission oil chamber 10 is lower than or equal to the upper threshold T₂ of the transmission oil temperature, and higher than or equal to the lower threshold T₁ of the transmission oil temperature, the real-time temperature T_{c} of the battery pack is lower than or equal to the battery work temperature T₃, and the vehicle thermal management system adjusts the communication situation of the first three-way valve 3, the second three-way valve 7 and the third three-way valve 15. Specifically, the pipelines where the port A and the port B of the first three-way valve 3 are located communicate with each other, and the pipeline where the port C is located is disconnected; the pipelines where the port A and the port B of the second three-way valve 7 are located communicate with each other, and the pipeline where the port C is located is disconnected; and the pipelines where the port A and the port B of the third three-way valve 15 are located communicate with each other, and the pipeline where the port C is located is disconnected. At the moment, the external oil cooler transfers the heat generated during the motor work to the battery pack 17, and the temperature rise action of the battery pack is achieved while the work environment temperature of the motor is lowered.

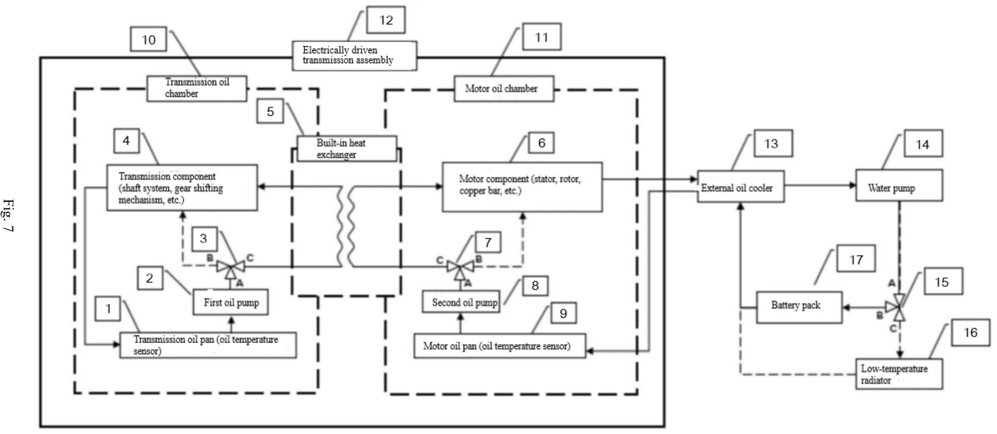

The complete circulation low-temperature heating mode is shown in Fig. 7. At the moment, the real-time oil temperature Tₐ of the transmission oil chamber 10 is lower than or equal to the lower threshold T₁ of the transmission oil temperature, the real-time temperature T_{c} of the battery pack is lower than or equal to the battery work temperature T₃, and the vehicle thermal management system adjusts the communication situation of the first three-way valve 3, the second three-way valve 7 and the third three-way valve 15. Specifically, the pipelines where the port A and the port C of the first three-way valve 3 are located communicate with each other, and the pipeline where the port B is located is disconnected; the pipelines where the port A and the port C of the second three-way valve 7 are located communicate with each other, and the pipeline where the port B is located is disconnected; the pipelines where the port A and the port B of the third three-way valve 15 are located communicate with each other, and the pipeline where the port C is located is disconnected. At the moment, the external oil cooler 13 transfers the heat generated during work of the motor to the battery pack 17, and the temperature rise of the battery pack 17 is achieved; and the built-in heat exchanger 5 transfers the heat generated during work of the motor to the transmission oil chamber 10, so as to achieve temperature rise of the transmission oil chamber 10.

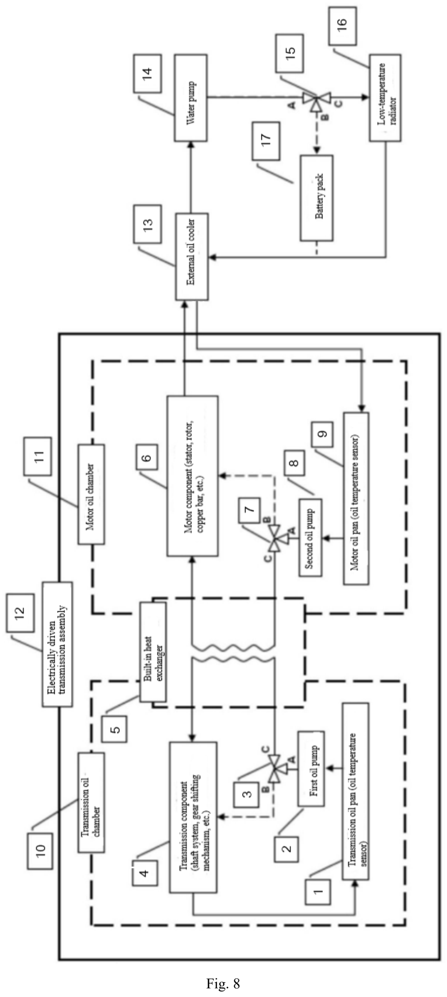

The complete circulation high-temperature cooling mode is shown in Fig. 8. At the moment, the real-time oil temperature Tₐ of the transmission oil chamber 10 is higher than or equal to the upper threshold T₂ of the transmission oil temperature, and the vehicle thermal management system adjusts the communication situation of the first three-way valve 3, the second three-way valve 7 and the third three-way valve 15. Specifically, the pipelines where the port A and the port C of the first three-way valve 3 are located communication with each other, and the pipeline where the port B is located is disconnected; the pipelines where the port A and the port C of the second three-way valve 7 are located communicate with each other, and the pipeline where the port B is located is disconnected; and the pipelines where the port A and the port C of the third three-way valve 15 are located communicate with each other, and the pipeline where the port B is located is disconnected. At the moment, temperature decrease of the lubricating oil in the transmission oil chamber 10 is preferably performed, the built-in heat exchanger 5 transfers the heat in the transmission oil chamber 10 to the motor oil chamber 11, and the external oil cooler 13 transfers the heat in the motor oil chamber to the external circulation loop from the electrically driven transmission assembly 12 and transfers the heat to the low-temperature radiator 16 for cooling.

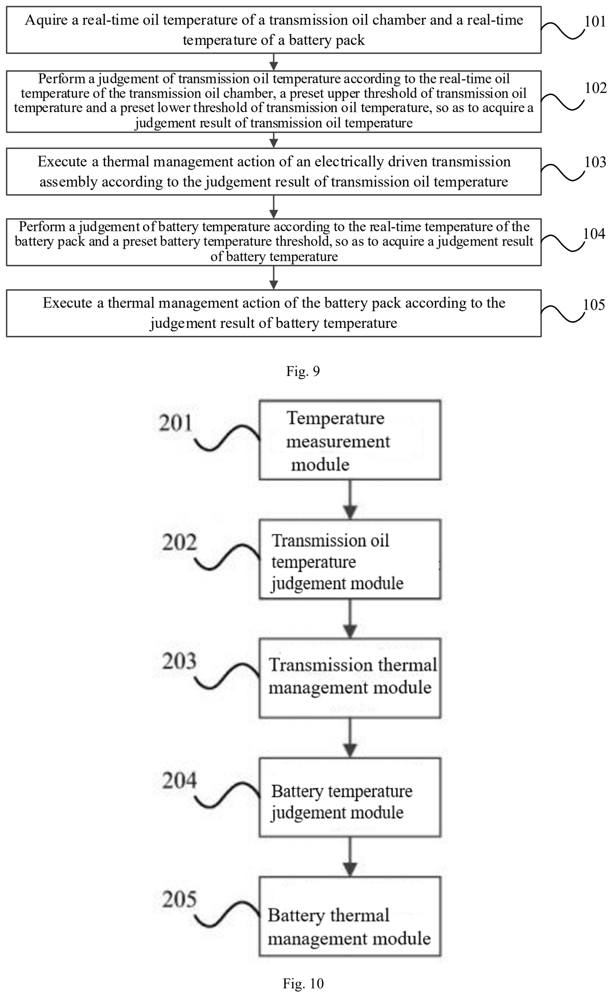

A second implementation of the present application relates to a vehicle thermal management method, as shown in Fig. 9, including:
step 101, a real-time oil temperature of a transmission oil chamber and a real-time temperature of a battery pack are acquired;
step 102, a judgement of transmission oil temperature is performed according to the real-time oil temperature of the transmission oil chamber, a preset upper threshold of transmission oil temperature and a preset lower threshold of transmission oil temperature, so as to acquire a judgement result of transmission oil temperature;
step 103, a thermal management action of an electrically driven transmission assembly is executed according to the judgement result of transmission oil temperature;
step 104, a judgement of battery temperature is performed according to the real-time temperature of the battery pack and a preset battery temperature threshold, so as to acquire a judgement result of battery temperature; and
step 105, a thermal management action of the battery pack is executed according to the judgement result of battery temperature.

A third implementation of the present application relates to a vehicle thermal management apparatus, as shown in Fig. 10, including:
a temperature measurement module 201, configured to acquire a real-time oil temperature of a transmission oil chamber and a real-time temperature of a battery pack;
a transmission oil temperature judgement module 202, configured to perform a judgement of transmission oil temperature according to the real-time oil temperature of the transmission oil chamber, a preset upper threshold of transmission oil temperature and a preset lower threshold of transmission oil temperature, so as to acquire a judgement result of transmission oil temperature;
a transmission thermal management module 203, configured to execute a thermal management action of an electrically driven transmission assembly according to the judgement result of transmission oil temperature;
a battery temperature judgement module 204, configured to perform a judgement of battery temperature according to the real-time temperature of the battery pack and a preset battery temperature threshold, to acquire a judgement result of battery temperature; and
a battery thermal management module 205, configured to execute a thermal management action of the battery pack according to the judgement result of battery temperature.

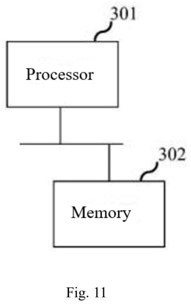

A fourth implementation of the present application relates to an electronic device, as shown in Fig. 11, including:
at least one processor 301; and
a memory 302 in communication connection with the at least one processor 301, wherein,
the memory 302 has instructions stored therein, the instructions are executable by the at least one processor, and the instructions, when being executed by the at least one processor 301, enable the at least one processor to perform the vehicle thermal management method of the second implementation of the present application.

The memory and the processor are connected by buses, and the buses may include any quantity of interconnected buses and bridges, and the buses connect various circuits of one or more processors and the memory together. The buses also connect a variety of other circuits of a peripheral device, a voltage regulator, a power management circuit, etc., which are known in the art and therefore are not described further herein. Bus interfaces provide interfaces between the buses and a transceiver. The transceiver may be one component or a plurality of components, such as a plurality of receivers and transmitters, providing units for communication with various other apparatus on a transmission medium. Data processed by the processor is transmitted on a wireless medium by an antenna, and furthermore, the antenna further receives the data and transmits it to the processor.

The processor is responsible for managing the buses and general processing, and may also provide a variety of functions including timing, peripheral interfaces, voltage regulation, power management, and other control functions. The memory may be configured to store data that the processor uses to perform operations.

A fifth implementation of the present application relates to a computer readable storage medium having a computer program stored therein, and the computer program, when being executed by a processor, enables the processor to perform the vehicle thermal management method of the second implementation of the present application.

That is, it may be understood by those skilled in the art that all or part of the steps in the implementation of the method in the above embodiments may be accomplished by instructing relevant hardware by means of a program, stored in a storage medium, and including a plurality of instructions for making a device (which may be a single chip microcomputer, a chip, etc.) or a processor execute all or part of the steps of the method described in all embodiments of the present application. The above storage medium includes: a USB flash disk, a mobile hard disk, a read-only memory (ROM), a random access memory (RAM), a disk or an optical disc and other media that may store program codes.

Those skilled in the art, after considering the specification and practicing the application disclosed herein, will easily think of other implementations of the present application. The present application is intended to cover any variations, purposes or adaptive changes of the present application, and these variations, purposes or adaptive changes follow the general principle of the present application and include common knowledge or customary technical means in the technical field that is not disclosed in the present application. The specifications and embodiments are merely considered as exemplary, and the true scope and spirit of the present application are essentially indicated by the appended claims.

It should be understood that the present application is not limited to the precise structure already described above and shown in the accompanying drawings, and various modifications and changes may be made without deviating from its scope. The scope of the present application is limited only by the attached claims.

## Claims

1. A vehicle thermal management system, **characterized in** comprising: an electrically driven transmission assembly and an external oil cooler, wherein
the electrically driven transmission assembly comprises a transmission oil chamber, a built-in heat exchanger and a motor oil chamber, and the transmission oil chamber has a transmission component, a transmission oil temperature sensor and a first control valve provided therein;
the built-in heat exchanger is configured to realize heat transfer between the transmission oil chamber and the motor oil chamber;
the first control valve is connected to the transmission component and the built-in heat exchanger and is configured to selectively communicate the transmission component and the built-in heat exchanger with each other according to a real-time oil temperature of the transmission oil chamber measured by the transmission oil temperature sensor; and
the external oil cooler is configured to transfer heat of the motor oil chamber to the outside of the electrically driven transmission assembly.

2. The system according to claim 1, **characterized in that** the transmission oil chamber also has a first oil pump provided therein, the first control valve is a first three-way valve, and the first three-way valve is connected to the built-in heat exchanger through a first pipeline, is connected to the first oil pump through a second pipeline, and is connected to the transmission component through a third pipeline;
the first oil pump is configured to drive lubricating oil in the transmission oil chamber to flow; and
the first three-way valve is configured to interconnect any two of the first pipeline, the second pipeline and the third pipeline.

3. The system according to claim 2, **characterized in that** the first three-way valve is configured to perform a thermal management action on the transmission oil chamber according to the real-time oil temperature of the transmission oil chamber, a preset upper threshold of transmission oil temperature and a preset lower threshold of transmission oil temperature.

4. The system according to claim 1, **characterized in that** the motor oil chamber has a motor component, a motor oil temperature sensor and a second control valve provided therein; and
the second control valve is connected to the motor component, the external oil cooler and the built-in heat exchanger, and is configured to selectively communicate the motor component, the built-in heat exchanger and the external oil cooler with each other according to a real-time oil temperature of the motor oil chamber measured by the motor oil temperature sensor.

5. The system according to claim 4, **characterized in that** the motor oil chamber also has a second oil pump provided therein, the second control valve is a second three-way valve, and the second three-way valve is connected to the built-in heat exchanger through a fourth pipeline, is connected to the second oil pump through a fifth pipeline, and is connected to the motor component through a sixth pipeline;
the second oil pump is configured to drive lubricating oil in connection pipelines in the motor oil chamber to flow; and
the second three-way valve is configured to interconnect any two of the fourth pipeline, the fifth pipeline and the sixth pipeline.

6. The system according to claim 1, **characterized in** further comprising: a battery pack, a third control valve and a battery temperature sensor, wherein
the third control valve is connected to the battery pack and the external oil cooler and is configured to selectively communicate the battery pack and the external oil cooler with each other according to a real-time temperature of the battery pack measured by the battery temperature sensor.

7. The system according to claim 6, **characterized in** further comprising: a low-temperature radiator, wherein the third control valve is further connected to the low-temperature radiator and is configured to selectively communicate the low-temperature radiator and the external oil cooler with each other according to the real-time temperature of the battery pack measured by the battery temperature sensor; and
the low-temperature radiator is configured to transfer heat acquired by the external oil cooler from the electrically driven transmission assembly to the outside of the system.

8. The system according to claim 7, **characterized in that** the external oil cooler is connected to a water pump, the third control valve is a third three-way valve, and the third three-way valve is connected to the external oil cooler through a seventh pipeline, is connected to the battery pack through an eighth pipeline, and is connected to the low temperature radiator through a ninth pipeline;
the water pump is configured to drive water in a connection pipeline of the external oil cooler to flow; and
the third three-way valve is configured to interconnect any two of the seventh pipeline, the eighth pipeline and the ninth pipeline.

9. A vehicle thermal management method, **characterized in that**, the method is used for controlling the vehicle thermal management system according to any one of claims 1 to 8 and comprises:
acquiring a real-time oil temperature of a transmission oil chamber and a real-time temperature of a battery pack;
performing a judgement of transmission oil temperature according to the real-time oil temperature of the transmission oil chamber, a preset upper threshold of transmission oil temperature and a preset lower threshold of transmission oil temperature to acquire a judgement result of transmission oil temperature;
executing a thermal management action of an electrically driven transmission assembly according to the judgement result of transmission oil temperature;
performing a judgement of battery temperature according to the real-time temperature of the battery pack and a preset battery temperature threshold to acquire a judgement result of battery temperature; and
executing a thermal management action of the battery pack according to the judgement result of battery temperature.

10. A vehicle thermal management apparatus, **characterized in that**, the apparatus is configured to control the vehicle thermal management system of any one of claims 1 to 8 and comprises:
a temperature measurement module, configured to acquire a real-time oil temperature of a transmission oil chamber and a real-time temperature of a battery pack;
a transmission oil temperature judgement module, configured to perform a judgement of transmission oil temperature according to the real-time oil temperature of the transmission oil chamber, a preset upper threshold of transmission oil temperature and a preset lower threshold of transmission oil temperature to acquire a judgement result of transmission oil temperature;
a transmission thermal management module, configured to execute a thermal management action of an electrically driven transmission assembly according to the judgement result of transmission oil temperature;
a battery temperature judgement module, configured to perform a judgement of battery temperature according to the real-time temperature of the battery pack and a preset battery temperature threshold to acquire a judgement result of battery temperature; and
a battery thermal management module, configured to execute a thermal management action of the battery pack according to the judgement result of battery temperature.

11. A vehicle, **characterized in** comprising:
at least one processor; and
a memory in communication connection with the at least one processor, wherein,
the memory has instructions stored therein, the instructions are executable by the at least one processor, and the instructions, when being executed by the at least one processor, enable the at least one processor to perform the vehicle thermal management method according to claim 9.

12. A computer readable storage medium, having a computer program stored therein, **characterized in that** the computer program, when being executed by a processor, enables the processor to perform the vehicle thermal management method according to claim 9.
